(19) Europäisches Patentamt
European Patent Office
Office européen des brevets

(11) Publication number: **0 342 815 A2**

(12) **EUROPEAN PATENT APPLICATION**

(21) Application number: **89304412.3**

(22) Date of filing: **02.05.89**

(51) Int. Cl.4: **C08K 13/02 , C08L 67/06 , C08L 63/00 , //(C08K5/14, 3:00),(C08K5/52,3:00)**

(30) Priority: **20.05.88 GB 8811947**

(43) Date of publication of application: **23.11.89 Bulletin 89/47**

(84) Designated Contracting States: **AT BE CH DE ES FR GB GR IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Schofield, John David**
**Old Oak House 482 Holcombe Road**
**Greenmount**
**Bury Lancashire BL8 4HB(GB)**
Inventor: **Davies, Peter Kingsley**
**5 Palin Wood Road Delph**
**Oldham Lancashire OL3 5UW(GB)**

(74) Representative: **James, David Gomer et al**
**Imperial Chemical Industries PLC Legal Department: Patents Po Box 6 Bessemer Road**
**Welwyn Garden City Herts, AL7 1HD(GB)**

(54) **Filled polymer composition.**

(57) A cross-linkable resin contains a filler and an anionically terminated polyester. The resin is a liquid system which can be cross linked by the addition of a cross linking promoter such as peroxide or by the application of heat or both. The resin can be an unsaturated polyester. The filler can be any filler which is added to a resin system, for example calcium carbonate or alumina trihydrate. The anionically terminated polyester is preferably a polycaprolactone containing a terminal phosphate group.

EP 0 342 815 A2

## FILLED POLYMER COMPOSITION

The present invention relates to filled polymer compositions and, in particular, to cross-linkable polymers which contain a filler.

It is frequently desirable to incorporate a filler into a polymeric material in order to modify the characteristics of the polymeric material in some way. Thus, fillers may be incorporated into a polymeric material, inter alia, to improve the mechanical strength of the polymer or to provide flame retardant properties to the polymeric material. It may be desired to incorporate a high level of filler into the polymeric material in order to achieve the desired properties. However, the presence of a high level of filler material in the polymeric material can cause a substantial increase in the viscosity of the polymeric material and, in consequence, there are problems in processing polymeric materials containing a high level of filler. The polymeric material containing the filler may be a cross-linkable polymeric material which is typically a liquid at ambient temperature prior to being cross-linked. The cross-linkable polymeric material may be cross-linked by any suitable technique such as by the addition of a cross-linking promoter, or by heating, or both, once the polymeric material has been formed to a desired shape. The presence of a filler increases the viscosity of the polymeric material and processing of the mixture is more difficult. Since the polymeric material will generally be susceptible to cross-linking on being heated, it is generally undesirable to raise the temperature of the mixture appreciably in an attempt to achieve better processing. The use of viscosity reducing agents has been proposed, for example Byk-W 990 is noted in Modern Plastics International, October 1986, at page 112, as being effective for wetting and dispersion of mineral fillers in hot-curing, glass fibre-reinforced unsaturated polyester resin and to give a reduction in impregnation viscosity. Whilst such materials provide some improvement, further improvements are still desirable.

According to the present invention there is provided a polymeric composition which comprises

(a) at least one normally liquid component of a cross-linkable material;

(b) at least one particulate solid; and

(c) a carboxylic acid ester or amide carrying a terminal acid group selected from sulphate, sulphonate, phosphate or phosphonate.

The term "normally liquid" is used herein to mean a material which is liquid at a temperature of not more than 50°C and preferred materials are liquid at ambient temperature, that is a temperature in the range 15°C to 25°C.

Component (a) may be a material which can be cross-linked by a promoter which may be a free radical generator such as a peroxide. Alternatively, component (a) may be a material which can be cross-linked by reaction with a multi-functional compound, for example a polyol or may be such a multi-functional compound. Cross linking of such materials may require the presence of a catalyst to promote the cross-linking reaction. The term "cross-linkable" is used herein in respect of materials which form a highly branched polymeric material which is essentially unprocessable by heat and/or pressure, in contrast to thermoplastic materials which can be melt-shaped and, if desired, reprocessed, at least to a limited extent.

Thus component (a) may be one component of a cross-linkable material which, on mixing with a further component or further components, undergoes reaction to form a highly branched polymeric material. Particularly preferred materials of this type include monomeric or oligomeric components of unsaturated polyesters, which may optionally contain a reactive diluent such as styrene; acrylates such as oligourethane acrylate or methacrylate, which can optionally contain a reactive diluent such as methyl methacrylate or of epoxy polymers such as those based on diglycidyl ethers of bisphenol A and novolac epoxy resins. Alternative preferred materials are monomeric or oligomeric components of urea-formaldehyde resins and phenol-formaldehyde resins including resole resins and novolac resins. Further materials which may be used are monomeric or oligomeric components of a cross-linkable urethane, for example polyether or polyester polyols and blocked isocyanate resins.

Component (a) may be formed into a cross-linked polymeric material using procedures known in the art, particularly by mixing with a cross-linking material which may be a multi-functional compound, a catalyst or a free radical generator or more than one type of cross-linking material. Cross- linking may require heating of component (a) or the addition of a cross-linking material and heating. Component (a) may be a mixture of materials which cross-link when suitably treated, for example by heating.

Component (b) can be any particulate solid which is conventionally incorporated into a polymeric material or may be a mixture of several different particulate solids. Particulate solids which may be used include calcium carbonate, hydrated alumina, magnesium hydroxide, talc, barytes, silica, mica, china clay, antimony oxide, dolomite, sand, powdered slate, wollastonite, glass fibre including chopped glass fibre or

glass flake. For ease of incorporating the solid into component (a) the particulate solid typically has a particle size which does not exceed about one mm. Preferred particulate solids have a mean particle size of not more than 200 micrometres, especially not more than 50 micrometres and particularly not more than 30 micrometres. Mixtures of particulate solids may be used where the mean particle size of each particulate solid component is different. The particle size of the particulate solid will be dependent on the particular solid and the purpose for which it is being incorporated into the component of a cross-linkable material. Particle size as used herein in respect of fibre or flake refers to fibre diameter or flake thickness respectively.

Component (c) is a carboxylic acid ester or amide carrying a terminal acid group. Compounds of this general type are disclosed in published European Patent Application No.164817.

A preferred compound which can be used as component (c) is one having the general formula:

$A - (O - B - CO)_m - D$ I

wherein

A and D are end groups one of which is or carries a terminal acid group selected from sulphate, sulphonate, phosphate and phosphonate and the other is a terminal group which does not render the compound hydrophilic;

B is a divalent hydrocarbon group; and

m is from 1 to 100.

In the compound of Formula I, when D carries the acid group, A is preferably the residue ($A^1$-CO-) of an esterifiable carboxylic acid of the formula $A^1$-COOH, in which $A^1$ is H, a hydrocarbon or a substituted hydrocarbon. Although $A^1$ is conveniently an optionally substituted alkyl, alkenyl, cycloalkyl or polycycloalkyl group containing up to 50, more preferably up to 35, carbon atoms, it can be any convenient monovalent group. In this case D preferably includes a polyvalent, more preferably di- or tri-valent, bridging group which links the acid group to the ester chain, $A^1CO(O-B-CO)_m-$, for example a group such as $D^2$ defined hereafter. Where D has a valency greater than 2 it may link two or more acid groups to a single ester or two or more esters chain to a single acid group. Where the acid group has more than one valency it may be linked to two or more esters through two bridging groups.

In the compound of Formula I, when A carries the acid group, D is preferably the residue of an alcohol, a thiol or a primary or secondary amine, $D^1$-XH, in which $D^1$ an aliphatic or alicyclic group as described for $A^1$; X is -O-, -S- or -NR-; and R is H, alkyl, alkenyl, cycloalkyl, or phenyl, in which the alkyl and alkenyl groups contain up to 20 carbon atoms and the cycloalkyl groups from 4 to 8 carbon atoms. In this case A is preferably the acid group itself and where the acid group has more than one valency it may be linked to two or more polyester chains, although A may also include a polyvalent linking group, like D above, which links the acid group to the polyester chain.

The hydrocarbon group represented by B, which is preferably an optionally substituted divalent alkyl, alkenyl, cycloalkyl or polycycloalkyl group, preferably contains up to 50, more preferably from 3 to 24, carbon atoms, with at least 3 carbon atoms separating the -O- and -CO- groups. Optional substitutents for $A^1$, $D^1$ and B include halo, especially chloro, hydroxy, amino, alkoxy and other non-ionic species in so far as they do not make the ester/amide chain hydrophilic in character.

It is preferred that m is from 2 to 75, more preferably 3 to 30, so that the compound of Formula I is an oligo- or poly-ester. Where m = 1 it is preferred that the group represented by A or D which is remote from the acid group contains at least 6 carbon atoms and that the surfactant contains at least 12 carbon atoms and more preferably at least 20 carbon atoms. It is also generally preferred that B is a pentamethylene group.

One preferred compound which can be used as component (c) is a compound conforming to the formula:

$[A^1 - CO - (O - B^1 - CO)_m - D^2]_k - L\ M$ II

wherein

$A^1$-CO is the residue of an esterifiable carboxylic acid of the formula, $A^1$-COOH;

$B^1$ is selected from alkylene, alkenylene, cycloalkylene, polycycloalkylene and halo derivatives thereof;

$D^2$ is a bridging group of the formula - X - G - Y - wherein X is -O-, -S- or -NR- and Y is -O-, -NR- or a direct link, in which each R independently is as hereinbefore defined or, where X and Y are both -NR-, the two groups, R, may form a single alkylene or alkenylene group linking the two nitrogens to which they are attached, and G is alkylene, alkenylene, cycloalkylene or arylene;

L is phosphonate or sulphonate;

M is a cation;

k is 1 or 2; and

m is as hereinbefore defined.

An especially preferred compound which can be used as component (c) is a compound conforming to the formula:

$[D^1 - X -(CO - B^1 - O)_m]_k - L\ M$ III

wherein $D^1$ is an aliphatic or alicyclic group and $B^1$, L, M, X, m and k are all as hereinbefore defined.

The residue of the esterifiable carboxylic acid represented by $A^1CO$ in Formula II may be any convenient terminal hydrophobic group for the ester chain, $-(O - B^1 - CO)_m$, although it is preferably an optionally substituted alkyl, alkenyl, cycloalkyl or polycycloalkyl group containing up to 50 carbon atoms and more preferably from 1 to 35 carbon atoms. The optional substituents are preferably selected from hydroxy, amino, halogen and alkoxy provided $A^1$ does not render the compound hydrophilic in character.

The aliphatic or alicyclic group represented by $D^1$ in Formula III is preferably an optionally substituted alkyl, alkenyl, cycloalkyl or polycycloalkyl group containing up to 35 carbon atoms, the optional substituents being preferably selected from halogen, tertiary amino and alkoxy.

The alkylene, alkenylene, cycloalkylene and polycycloalkylene groups represented by $B^1$ preferably contain from 3 to 35 carbon atoms, more preferably from 4 to 20 carbon atoms, with at least 3 and more preferably at least 4 carbon atoms separating the -O- and -CO- groups, and are preferably unsubstituted. It is especially preferred that $B^1$ is a pentamethylene group. The alkylene and alkenylene groups represented by G preferably contain up to 10 carbon atoms and more preferably from 2 to 6 carbon atoms. The cycloalkylene group represented by G preferably contains from 4 to 8 carbon atoms and especially preferably is 1,4-cyclohexylene. The arylene group represented by G is preferably monocyclic and especially 1,4-phenylene.

The alkyl and alkenyl groups represented by R may contain up to 25 carbon atoms and preferably contain up to 5 carbon atoms. Where two groups, R, form a single group this preferably contains up to 10 carbon atoms.

In the compound of Formula II, when Y is -O-, the acid group, L, is attached to the ester/amide chain through an oxygen atom so that phosphonate and -O- form phosphate and sulphonate and -O-form sulphate. Similarly, in the compound of Formula II, when Y is -NR-, phosphonate and -NR- form phosphoramide and sulphonate and -NR-form sulphonamide. In the compound of Formula III, the group L is attached to the ester chain through an oxygen atom and the phosphonate and sulphonate groups then form phosphate and sulphate groups respectively.

The cation represented by M is preferably $H^+$, a metal ion, an ammonium ion or a substituted ammonium ion and examples of suitable cations are $Na^+$, $K^+$, $Ca^{2+}$, $NH_4^+$, $NH(CH_2CH_2OH)_3^+$, $NH(CH_3)_3^+$ and $N(CH_3)_4^+$.

Specific examples of the bridging group represented by $D^2$ are $-NHC_2H_4-$, $-OC_2H_4-$, $-OC_2H_4O-$, $-OC_2H_4NH-$, $-NH(CH_2)_nNH-$, wherein n is from 2 to 5, piperazin-1,4-ylene and phen-1,4-ylene- diamino.

Examples of the groups represented by $A^1$ and $A^2$ are methyl, ethyl, $CH_3(CH_2)_4-$, $CH_3(CH_2)_{10}-$, $CH_3(CH_2)_{14}-$, $CH_3(CH_2)_{16}-$, $HO(CH_2)_5-$, $CH_3(CH_2)_7CH=CH(CH_2)_7-$, $CH_3(CH_2)_{28}-$, $CH_3(CH_2)_5CH(OH)(CH_2)_{10}-$, $CH_3(CH_2)_4CH=CHCH_2CH=CH(CH_2)_7-$, $CH_3(CH_2)_5CH(OH)CH_2CH=CH(CH_2)_7-$ and $CH_3OCH_2-$.

Examples of the group represented by $D^1$ are methyl, ethyl, $CH_3(CH_2)_9-$, $CH_3(CH_2)_{11}-$, $CH_3(CH_2)_{15}-$, $CH_3(CH_2)_{17}-$, $CH_3(CH_2)_{23}-$, $CH_3(CH_2)_7CH=CH(CH_2)_7-$, $CH_3OCH_2-$ and $CH_3(CH_2)_4CH=CHCH_2CH=CH(CH_2)_7-$.

Examples of the groups represented by B and $B^1$ are:

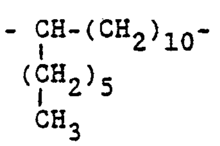 , 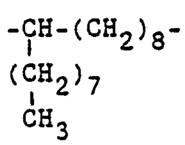 , 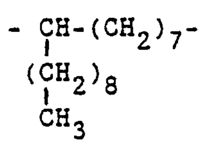 , 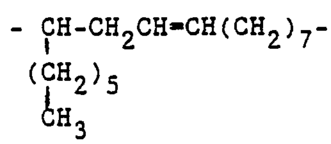

and preferably $-(CH_2)_5-$.

The polymeric composition of the present invention can contain a high level of the particulate solid which is component (b) and still have a sufficiently low viscosity to be readily processible. Hence, the composition may contain a higher level of the particulate solid than is otherwise readily possible or contains the same proportion of the particulate solid but is more readily processed.

The proportion of component (a) which is present typically does not exceed 70% by weight and in general does not exceed 55% by weight. The proportion of component (a) can be as low as 10% by weight and in general is at least 20% by weight but typically is at least 30% by weight.

The proportion of component (b) may be as high as 90% by weight but typically does not exceed 80%

by weight and in general is not more than 70% by weight. The proportion of component (b) can be as low as 30% by weight but typically is at least 45% by weight.

The proportion of component (c) in general does not exceed 2% by weight and particularly does not exceed 1% by weight. The proportion of component (c) may be as low as 0.1% by weight but typically is at least 0.2% by weight. The proportion of component (c) is conveniently between 0.5 and 2% by weight of the weight of component (b). Unless otherwise stated, the proportions by weight are a percentage of the total composition of components (a), (b) and (c).

The composition of the present invention can be prepared by mixing together components (a), (b) and (c) using any suitable procedure for mixing solids and liquids.

It is preferred that component (c) is not the last of the components to be incorporated into the composition. Hence, it is preferred either to dissolve component (c) in component (a) and then add component (b) or to contact component (b) with component (c) and thereafter mix with component (a). Component (b) can be contacted with component (c) by subjecting the mixture to a grinding operation. Component (c) can be added to component (b) as a solution or an emulsion in a suitable solvent such as esters, ethers, ketones, aromatic hydrocarbons, and alcohols containing at least three carbon atoms, or in an non-solvent such as water or a water/glycol mixture or a water/urea mixture and the solvent or non-solvent then evaporated, such a process being effected either during a grinding operation or by agitation of the solid which is component (b) during the addition of the solution or emulsion and subsequent evaporation of the solvent or non-solvent. Alternatively, component (c), or a solution or an emulsion thereof, may be coated onto glass fibre or impregnated into a glass fibre mat and any solvent or non-solvent then evaporated off. The glass fibre coated with component (c) can then be further coated with component (a) by any suitable process, for example by pultrusion.

The mixing can be effected at an elevated temperature but if component (a) undergoes cross-linking at an elevated temperature, it is desirable that the mixing with component (a) is effected at a temperature, and for a time, which do not result in any significant cross-linking. It will be appreciated that the particular conditions which cause significant cross-linking are dependent on the particular cross-linking promoter which is present and appropriate conditions can be determined by simple experiment. In general it is preferred that the mixing temperature does not exceed 50°C and the time of mixing at the elevated temperature does not exceed one hour.

The composition when obtained can be subjected to a shaping step and then cross-linked. However, if component (a) requires the addition of at least one further component in order to be cross-linkable, this further component, or components, should be added prior to effecting the required cross-linking steps.

It will be appreciated that the composition of the present invention may contain further components in addition to those herein before disclosed. More specifically, the composition may include components which are conventionally incorporated into polymeric materials, particularly cross-linkable polymeric materials, such further components including processing aids, mold release agents, chemical thickening agents, catalyst inhibitors, low shrink-low profile additives and other components known to those skilled in the art.

Various aspects of the present invention are illustrated by the following non-limiting examples in which all parts and percentages are by weight unless stated to the contrary.

Intermediate 1

A mixture of 500g of epsilon-caprolactone, 67g of dodecanol and 0.1g of tetrabutyl titanate was stirred at 160-180°C under a stream of nitrogen for 19 hours. The reaction mass was then discharged and allowed to solidify to a waxy solid, hereinafter referred to as Intermediate 1.

Intermediate 2

This was prepared in the same manner as Intermediate 1 with the exception that the quantity of dodecanol was reduced to 32.6g and the reaction time was reduced to 6 hours. The waxy product is hereinafter referred to as Intermediate 2.

Intermediate 3

This was prepared in the same manner as Intermediate 1 with the exception that the quantity of

dodecanol was reduced to 16.0g and the reaction time was reduced to 6 hours. The waxy product is hereinafter referred to as Intermediate 3.

Intermediate 4

This was prepared in the same manner as Intermediate 1 with the exception that the quantities of epsilon-caprolactone and dodecanol used were 250g and 51g respectively. The waxy product is hereinafter referred to as Intermediate 4.

Intermediate 5

This was prepared in the same manner as Intermediate 1 with the exception that the quantities of epsilon-caprolactone and dodecanol used were 250g and 90g respectively. The soft waxy product is hereinafter referred to as Intermediate 5.

Intermediate 6

This was prepared in the same manner as Intermediate 1 with the exception that the quantities of epsilon-caprolactone and dodecanol used were 122.6g and 100g respectively. The very soft waxy product is hereinafter referred to as Intermediate 6.

Intermediate 7

A mixture of 153g of epsilon-caprolactone, 87g of n-octanol and 0.1g of tetrabutyl titanate was stirred at 160-180°C under a stream of nitrogen for 10 hours. The reaction mass was then discharged, and is hereinafter referred to as Intermediate 7.

Intermediate 8

A mixture of 355g of epsilon-caprolactone, 50g of dodecylamine and 0.1g of tetrabutyl titanate was stirred at 170-180°C under a stream of nitrogen for 8 hours. The reaction mass was then discharged, and is hereinafter referred to as Intermediate 8.

Additive 1

A solution A was prepared by mixing 7.58g of a 46.6% aqueous sodium hydroxide solution and 19.9g of water then dissolving 12.5g of aminoethane sulphonic acid in the mixture.

A solution B was prepared by mixing 136.8g of E-caprolactone and 21.7g toluene until the mixture was homogeneous.

Solution B was transferred to a flask equipped with a gas inlet tube and a Dean and Stark water separator. Solution A was added to the flask over 5 minutes while the contents were stirred rapidly. Stirring was continued while heating was applied, and initially all the water was removed in the Dean and Stark separator. At this stage some solid was deposited on the sides of the flask. Toluene was then distilled off until the temperature of the reaction mass rose to 180°C, and during this period the solid re-dissolved giving a homogeneous reaction mass. The mass was then stirred for 7 hours at 170-190°C under a stream of inert gas, after which the reaction was stopped by cooling the reaction mixture to room temperature. Infra-red spectroscopy showed that almost no unreacted E-caprolactone was then present. The reaction product was a waxy solid, hereinafter called Additive 1.

Additive 2

317g of Intermediate 1 was stirred at 60-65°C and log of phosphorus pentoxide was then added gradually over 30 minutes. The temperature was then raised to 90°C, and the reaction mass stirred for a further 16 hours at this temperature. It was then discharged and allowed to solidify to give a waxy solid, hereinafter called Additive 2.

Additive 3

The process used for Additive 2 was repeated except that the 317g of Intermediate 1 were replaced by 317g of Intermediate 2 and the quantity of phosphorus pentoxide was reduced to 5g. The product was a waxy solid, hereinafter called Additive 3.

Additive 4

The process used for Additive 2 was repeated except that the 317g of Intermediate 1 were replaced by 317g of Intermediate 3 and the quantity of phosphorus pentoxide was reduced to 2.5g. The product was a waxy solid, hereinafter called Additive 4.

Additive 5

115g of Intermediate 1 were stirred at 60°C and 8.83g of chlorosulphonic acid were added gradually over 10 minutes. The mixture was then stirred for 16 hours at 65-75°C when the acid value was 45mg.KOH/g. The reaction mass was then discharged and allowed to solidify to a waxy solid, hereinafter called Additive 5.

Additive 6

The process used for Additive 2 was repeated except that 105g of Intermediate 1 and 5g of phosphorus pentoxide were used. The product was a waxy solid, hereinafter called Additive 6.

Additive 7

The process used for Additive 2 was repeated except that 317g of Intermediate 1 were replaced by 211g of Intermediate 4. The product was a waxy solid, hereinafter called Additive 7.

Additive 8

The process used for Additive 2 was repeated except that the 317g of Intermediate 1 were replaced by 148g of Intermediate 5. The product was a waxy solid, hereinafter called Additive 8.

Additive 9

The process used for Additive 2 was repeated except that the 317g of Intermediate 1 were replaced by 100g of Intermediate 6, and the quantity of phosphorus pentoxide was increased to 11.5g. The product was a soft waxy solid, hereinafter called Additive 9.

Additive 10

75.6g of Intermediate 7 were stirred at room temperature and 10g of phosphorus pentoxide were added gradually over 30 minutes. The temperature was then raised to 90°C, and the reaction mass stirred for a further 16 hours at this temperature. It was then discharged and the product, a very viscous liquid, is

hereinafter called Additive 10.

Additive 11

106g of Intermediate 8 were stirred at 50-55° C and 5g of phosphorus pentoxide were added gradually over 45 minutes. The temperature was then raised to 90° C, and the reaction mass stirred for a further 4 hours at this temperature. It was then discharged and the product, a waxy solid, is hereinafter called Additive 11.

Additive 12

9.47g of Additive 6 was dissolved in 63.5g of isopropanol at approximately 70° C. 1g of triethanolamine was added to the solution and after agitation for five minutes the reaction mass was allowed to cool. A pale cream solid separated out and this was filtered off and washed with 20g of cold isopropanol. The residual isopropanol was removed under water pump pressure to give a pale cream solid, hereinafter referred to as Additive 12.

Examples 1 to 34

Dispersions having the compositions as set out in the Table were prepared as described hereafter.

An additive was charged to a 180cm$^3$ capacity wide necked flask. A resin was then added and the mixture was warmed, with stirring, to 40° C to achieve solution of the additive in the resin. A particulate solid was then added, stepwise, to the mixture of resin and additive, the solid being mixed into the liquid phase with a spatula after each addition of solid. Once all of the solid had been added, the mixture was stirred at 1300 r.p.m. for three minutes using a toothed disc stirrer of the Cowles type driven by a Janke and Kunkel Model RW 20 stirrer motor.

By way of comparison (Comparative Examples A to AH), dispersions were prepared as described for Examples 1 to 34 with the exception that the additive was not incorporated into the resin and the resulting product was resin and particulate solid with no other additive.

Details of the compositions produced, and the viscosity of each composition, are set out in the Table.

Table

| Ex. or Comp. Ex. | Filler Type (a) | Filler Amount (b) | Additive Type (c) | Additive Amount (b) | Resin Type (d) | Resin Amount (b) | Viscosity (Pas) (e) |
|---|---|---|---|---|---|---|---|
| 1 | A1 | 52.5 | 9 | 0.53 | S | 29.47 | 255* |
| A | A1 | 52.5 | NIL | NIL | S | 30 | 490* |
| 2 | C1 | 52.5 | 9 | 0.53 | S | 29.47 | 39** |
| B | C1 | 52.5 | NIL | NIL | S | 30 | 48** |
| 3 | A1 | 52.5 | 3 | 0.53 | S | 29.47 | 255* |
| C | A1 | 52.5 | NIL | NIL | S | 30 | 490* |
| 4 | C1 | 52.5 | 3 | 0.53 | S | 29.47 | 24** |
| D | C1 | 52.5 | NIL | NIL | S | 30 | 48** |
| 5 | A2 | 64 | 4 | 0.64 | S | 39.36 | 56** |
| E | A2 | 64 | NIL | NIL | S | 40 | 68** |

Table (continued)

| Ex. or Comp. Ex. | Filler Type (a) | Filler Amount (b) | Additive Type (c) | Additive Amount (b) | Resin Type (d) | Resin Amount (b) | Viscosity (Pas) (e) |
|---|---|---|---|---|---|---|---|
| 6 | C1 | 52.5 | 4 | 0.53 | S | 29.47 | 38** |
| F | C1 | 52.5 | NIL | NIL | S | 30 | 48** |
| 7 | C1 | 52.5 | 6 | 0.53 | P | 29.47 | 28** |
| G | C1 | 52.5 | NIL | NIL | P | 30 | 57** |
| 8 | A1 | 52.5 | 6 | 0.53 | P | 29.47 | 92* |
| H | A1 | 52.5 | NIL | NIL | P | 30 | 300* |
| 9 | A3 | 63 | 6 | 0.63 | P | 29.37 | 188* |
| I | A3 | 63 | NIL | NIL | P | 30 | 860* |
| 10 | A4 | 52.5 | 6 | 0.53 | M1 | 29.47 | 5.3** |
| J | A4 | 52.5 | NIL | NIL | M1 | 30 | 38** |
| 11 | A3 | 63 | 6 | 0.63 | M1 | 29.37 | 3.1*** |
| K | A3 | 63 | NIL | NIL | M1 | 30 | 46*** |
| 12 | A1 | 52.5 | 6 | 0.53 | M2 | 29.47 | 13+ |
| L | A1 | 52.5 | NIL | NIL | M2 | 30 | 58+ |
| 13 | A5 | 27 | 6 | 0.27 | M2 | 29.73 | 3.7*** |
| M | A5 | 27 | NIL | NIL | M2 | 30 | 15*** |
| 14 | C1 | 52.5 | 6 | 0.53 | S | 29.47 | 24** |
| N | C1 | 52.5 | NIL | NIL | S | 30 | 48** |
| 15 | C2 | 80 | 6 | 0.8 | S | 39.2 | 250* |
| O | C2 | 80 | NIL | NIL | S | 40 | 860* |
| 16 | A2 | 64 | 6 | 0.64 | S | 39.36 | 41** |
| P | A2 | 64 | NIL | NIL | S | 40 | 68** |
| 17 | A1 | 52.5 | 6 | 0.53 | S | 29.47 | 170* |
| Q | A1 | 52.5 | NIL | NIL | S | 30 | 490* |
| 18 | A4 | 48 | 6 | 0.48 | S | 29.52 | 130* |
| R | A4 | 48 | NIL | NIL | S | 30 | 242* |
| 19 | A3 | 63 | 6 | 0.63 | S | 29.37 | 380* |
| S | A3 | 63 | NIL | NIL | S | 30 | 1005* |
| 20 | A1 | 68 | 3 | 0.68 | S | 39.32 | 226* |
| T | A1 | 68 | NIL | NIL | S | 40 | 400* |

Table (continued)

| Ex. or Comp. Ex. | Filler Type (a) | Filler Amount (b) | Additive Type (c) | Additive Amount (b) | Resin Type (d) | Resin Amount (b) | Viscosity (Pas) (e) |
|---|---|---|---|---|---|---|---|
| 21 | A1 | 68 | 7 | 0.68 | S | 39.32 | 180* |
| U | A1 | 68 | NIL | NIL | S | 40 | 400* |
| 22 | A1 | 68 | 8 | 0.68 | S | 39.32 | 180* |
| V | A1 | 68 | NIL | NIL | S | 40 | 400* |
| 23 | A1 | 68 | 10 | 0.68 | S | 39.32 | 166* |
| W | A1 | 68 | NIL | NIL | S | 40 | 400* |
| 24 | A1 | 68 | 11 | 0.68 | S | 39.32 | 260* |
| X | A1 | 68 | NIL | NIL | S | 40 | 400* |
| 25 | A1 | 68 | 12 | 0.68 | S | 39.32 | 355* |
| Y | A1 | 68 | NIL | NIL | S | 40 | 400* |
| 26 | CC | 36 | 6 | 0.36 | S | 39.64 | 40+ |
| Z | CC | 36 | NIL | NIL | S | 40 | 54+ |
| 27 | MH | 56 | 6 | 0.56 | MI | 39.44 | 52++ |
| AA | MH | 56 | NIL | NIL | M1 | 40 | 76++ |
| 28 | A4 | 70 | 5 | 0.7 | MI | 39.3 | 105* |
| AB | A4 | 70 | NIL | NIL | MI | 40 | 138* |
| 29 | SP | 52.5 | 6 | 0.53 | M3 | 34.47 | 40+++ |
| AC | SP | 52.5 | NIL | NIL | M3 | 35 | 108+++ |
| 30 | T | 32 | 6 | 0.32 | AH | 59.68 | 40** |
| AD | T | 32 | NIL | NIL | AH | 60 | 53** |
| 31 | B | 160 | 6 | 1.6 | AH | 58.4 | 23* |
| AE | B | 160 | NIL | NIL | AH | 60 | 55* |
| 32 | SP | 72 | 6 | 0.72 | AH | 59.28 | 17.5** |
| AF | SP | 72 | NIL | NIL | AH | 60 | 32** |
| 33 | A1 | 40 | 6 | 0.4 | AH | 59.6 | 13** |
| AG | A1 | 40 | NIL | NIL | AH | 60 | 22** |
| 34 | SF | 68 | 6 | 0.68 | S | 39.32 | 240* |
| AH | SF | 68 | NIL | NIL | S | 40 | 290* |

Notes to the Table

(a) A1 is alumina trihydrate having a median particle size of 6-7 micrometres and available from B.A. Chemicals Limited as Baco FRF 80.
A2 is alumina trihydrate having a median particle size of 14-20 micrometres and available from B.A. Chemicals Limited as Baco FRF 20.
A3 is alumina trihydrate having a median particle size of 5-6 micrometres which has been silane surface treated and is available from B.A. Chemicals Limited as Baco FRF 85 S5.
A4 is alumina trihydrate having a median particle size of 5-6 micrometres and available from B.A. Chemicals Limited as Baco FRF 85.
A5 is alumina trihydrate having a median particle size of 0.8 micrometres and available from Croxton and Garry as Trihyde OL-104.
B is barytes having a median particle size of 22 micrometres and supplied by Hopton Micronising and Minerals as Barifine 200.
C1 is calcium carbonate having a mean particle size of 3 micrometres and a particle size range of 2 to 10 micrometres and available from Croxton and Garry as Millicarb.
C2 is calcium carbonate having particles with a particle size up to 200 micrometres and with a mean particle size of 30 micrometres which is available from Croxton and Garry as Durcal 40.
CC is a china clay supplied by English China Clay International Ltd as China Clay Grade E.
MH is magnesium hydroxide having a mean particle size of 4.4 micrometres and a surface area of $14m^2/g$.
SF is fine silica powder sieved to a particle size of less than 53 micrometres and supplied by W Hawley and Son Ltd as silica flour N 4560
SP is slate which has been ground to a powder having a particle size of all particles less than 75 micrometres.

T is talc having a particle size of all particles less than 20 micrometres and supplied by A/S Norwegian Talc as Microtalc AT 1.
(b) Amount is given in grammes.
(c) The number of the additive type refers to the products obtained by the procedures described under Additive 1 to Additive 12.
(d) S is a high reactivity orthophthalic acid based unsaturated polyester resin available from Freeman Chemicals Limited as Stypol 40-6020.
P is a medium reactivity unsaturated polyester resin suitable for pressings and sheet and dough moulding compounds and available from BASF as Palatal A420.
M1 is a methacrylate based resin suitable for resin injection and cold press applications and available from ICI Chemicals and Polymers Limited as Modar 835 S (catalyst stable).
M2 is a low profile methacrylate based resin suitable for pultrusion and available from ICI Chemicals and Polymers Limited as Modar 826 HT.
M3 is a methacrylate based resin suitable for cold press applications and available from ICI Chemicals and Polymers Limited as Modal 845 MVS.
AH is a 2:1 by weight mixture of an epoxy resin and hardener which contains an epoxy casting and laminating resin available as a tooling resin from Ciba Geigy as Araldite CY 219 and a hardener for use with Araldite CY 219 and supplied by Ciba Geigy as Hardener HY 219.
(e) Viscosity is given in Pascal seconds (Pas) and is measured on a Haake RV2 rotoviscometer with a MK 500 head using a 1° Angle cone at 25° C and a shear rate as specified hereafter.
* indicates a shear rate of $1s^{-1}$
** indicates a shear rate of $10s^{-1}$
*** indicates a shear rate of $20s^{-1}$
\+ indicates a shear rate of $5s^{-1}$
\+ + indicates a shear rate of $1.5s^{-1}$
\+ + + indicates a shear rate of $2s^{-1}$

## Claims

1. A polymeric composition comprising
(a) at least one normally liquid component of a cross-linkable material;
(b) at least one particulate solid; and

(c) a carboxylic acid ester or amide carrying a terminal acid group selected from sulphate, sulphonate, phosphate or phosphonate.

2. A composition as claimed in claim 1 wherein component (a) is, or includes, a monomeric or oligomeric components of unsaturated polyesters, of acrylates or of epoxy polymers.

3. A composition as claimed in either claim 1 or claim 2 wherein component (b) is one or more solids selected from calcium carbonate, hydrated alumina, magnesium hydroxide, talc, barytes, silica, mica, china clay, antimony oxide, dolomite, sand, powdered slate, wollastonite, glass fibre and glass flake.

4. A composition as claimed in any one of claims 1 to 3 wherein the particulate solid has a particle size of not more than 200 micrometres.

5. A composition as claimed in any one of claims 1 to 4 wherein component (c) is a compound of the general formula:

$A -(O - B - CO)_m- D$

wherein

A and D are end groups one of which is, or carries, a terminal acid group selected from sulphate, sulphonate, phosphate or phosphonate, and the other is any terminal group which does not render the compound hydrophilic;

B is a divalent hydrocarbon group; and

m is from 1 to 100.

6. A composition as claimed in any one of claims 1 to 4 wherein component (c) is a compound of the general formula:

$[D^1 - X -(CO - B^1 - O)_m]_k- L\ M$ III

wherein

$D^1$ is an aliphatic or alicyclic group;

$B^1$ is selected from alkylene, alkenylene, cycloalkylene, polycycloalkylene and halo-derivatives thereof;

L is phosphonate or sulphonate;

M is a cation;

X is -O-, -S- or -NR-;

k is 1 or 2; and

m is from 1 to 100.

7. A composition as claimed in either claim 5 or claim 6 wherein B or $B^1$is a pentamethylene group.

8. A composition as claimed in any one of claims 1 to 7 which contains 10 to 70% by weight of component (a).

9. A composition as claimed in any one of claims 1 to 8 which contains 30 to 90% by weight of component (b).

10. A composition as claimed in any one of claims 1 to 9 which contains 0.1 to 2% by weight of component (c).

11. A process for the preparation of a polymeric composition which comprises mixing together

(a) at least one normally liquid component of a cross-linkable material;

(b) at least one particulate solid; and

(c) a carboxylic acid ester or amide carrying a terminal acid group selected from sulphate, sulphonate, phosphate or phosphonate.

12. A process as claimed in claim 11 wherein component (c) is not the last of the components to be incorporated into the composition.